# EUROPÄISCHE PATENTSCHRIFT

(11) **EP 3 637 594 B1**
(45) Veröffentlichungstag und Bekanntmachung des Hinweises auf die Patenterteilung: **21.02.2024**
(21) Anmeldenummer: 19164172.9
(22) Anmeldetag: 20.03.2019
(51) Int. Cl.: H02K 3/52

(54) **STATOR FÜR EINEN ELEKTROMOTOR**
STATOR FOR AN ELECTRIC MOTOR
STATOR POUR UN MOTEUR ÉLECTRIQUE

(30) Priorität: 10.10.2018 EP 18465597
(43) Veröffentlichungstag der Anmeldung: 15.04.2020
(73) Patentinhaber: Vitesco Technologies GmbH, 93055 Regensburg (DE)
(72) Erfinder: Aronet, Vlad, 325300 Bocsa (RO); Schein, Uwe, 34260 Kaufungen (DE)
(74) Vertreter: Vitesco Technologies

(56) Entgegenhaltungen:
- EP-A2- 3 151 389
- US-A1- 2013 043 743
- US-A1- 2015 145 359
- US-B2- 7 492 067

## Beschreibung

Die vorliegende Erfindung betrifft einen Stator für einen Elektromotor, einen Elektromotor mit dem Stator und ein Verfahren zum Herstellen des Stators.

Elektromotoren weisen allgemein einen Stator mit Spulenwicklungen und einen Rotor auf. Durch entsprechende elektrische Versorgung der Spulenwicklungen wird ein in einer Umfangsrichtung umlaufendes Magnetfeld erzeugt, dem der Rotor folgt und sich dabei um eine Rotationsachse (des Elektromotors bzw. Stators) dreht. Die EP 3 1513 89 A2 betrifft eine rotierende elektrische Maschine umfassendt einen Rotorkern, der an einer Rotationsachse befestigt ist, einen Statorkern, der dem Rotorkern zugewandt angeordnet ist und eine Mehrzahl Zähne aufweist, eine Mehrzahl Wicklungen, die die Mehrzahl Zähne des Statorkerns umwickeln, eine Mehrzahl von Wicklungsanschlussklemmen, die mit jeweiligen Enden der Mehrzahl von Wicklungen verbunden sind, eine Mehrzahl von Sammelschienen, die mit der Mehrzahl Wicklungsanschlussklemmen verbunden sind, wobei jede Sammelschienen entweder in einer Bogenform oder einer ringförmigen Form ausgebildet ist, und einen Sammelschienenhalter, der die Sammelschienen in einem laminierten Zustand hält und einen Haltereingriffsabschnitt aufweist, der mit einem Sammelschienen-Eingriffsabschnitt in Eingriff steht, der an mindestens einer der mehreren Sammelschienen vorgesehen ist.

Die US 7 492 067 B2 betrifft einen mehrpoligen Generatorstator vom Außenrotortyp, bei dem ein von einer Spule ausgehender Anschlussdraht durch Verschmelzen mit einem in eine Spule eingebauten und an dieser befestigten Verbindungsanschluss verbunden ist.

Die US 2013/043743 A1 betrifft einen Motorstator für den Antrieb einer elektrischen Servolenkung in einem Kraftfahrzeug, der eine Mehrzahl von wenigstens teilweise mit einer Isolierhülle ummantelten Leitungen zur elektrischen Versorgung von Spulenwicklungen des Stators, einen Kontaktring mit Anschlüssen zur elektrischen Versorgung dieser Leitungen und eine Mehrzahl von U-artig ausgebildeten Klammern aufweist, wobei die Klammern jeweils wenigstens eine der Leitungen kontaktierend umgreifen und mit wenigstens einem der Anschlüsse verbunden sind.

Eine Aufgabe einer Ausführung der vorliegenden Erfindung ist es, einen Elektromotor bzw. Stator für einen Elektromotor bzw. dessen Herstellung zu verbessern.

Diese Aufgabe wird durch einen Stator mit den Merkmalen des unabhängigen Anspruchs 1 gelöst.

Der unabhängige Anspruch 7 offenbart ein Verfahren zum Herstellen eines hier beschriebenen Stators unter Schutz. Vorteilhafte Ausführungsformen der Erfindung sind Gegenstand der Unteransprüche. Gemäß der vorliegenden Erfindung weist ein Stator für einen Elektromotor eine Mehrzahl von, insbesondere wenigstens teilweise metallischen, Leitungen auf, mit denen Spulenwicklungen des Stators elektrisch bzw. mit Strom bzw. Spannung versorgbar sind bzw. versorgt werden bzw. die hierzu vorgesehen, insbesondere eingerichtet, sind bzw. verwendet werden.

In einer Ausführung sind die Leitungen integral bzw. einstückig mit den Spulenwicklungen ausgebildet, insbesondere können die Leitungen wenigstens teilweise zu den Spulen gewickelt sein.

In einer anderen Ausführung sind die Leitungen und die Spulenwicklungen separat hergestellt und in einer Weiterbildung anschließend zur elektrischen Versorgung der Spulenwicklungen über die Leitungen miteinander, in einer Ausführung stoffschlüssig, verbunden.

In einer Ausführung verbinden die Leitungen jeweils wenigstens zwei, in einer Weiterbildung (in Umfangsrichtung des Stators) benachbarte Spulenwicklungen. Zusätzlich oder alternativ werden bzw. sind in einer Ausführung wenigstens zwei, in einer Weiterbildung (in Umfangsrichtung des Stators) benachbarte, der Spulenwicklungen durch wenigstens zwei, in einer Weiterbildung wenigstens teilweise parallele, (der) Leitungen verbunden.

Erfindungsgemäß sind die Leitungen wenigstens teilweise mit einer Isolierhülle, die in einer Weiterbildung Kunststoff aufweist, insbesondere hieraus bestehen kann, ummantelt. Dadurch kann in einer Ausführung der Stator kompakter und/oder einfacher hergestellt und/oder sein Betriebsverhalten verbessert werden.

Gemäß der vorliegenden Erfindung weist der Stator einen ein- oder mehrteiligen Kontaktring mit Anschlüssen auf, mit denen die Leitungen elektrisch bzw. mit Strom bzw. Spannung versorgbar sind bzw. versorgt werden bzw. die hierzu vorgesehen, insbesondere eingerichtet, sind bzw. verwendet werden, und die sich hierzu in einer Ausführung radial bzw. quer (zur Rotationsachse des Stators bzw. Elektromotors) nach außen erstrecken.

Außer diesen Anschlüssen kann der Kontaktring in einer Ausführung noch Kontakte aufweisen, mit denen er in einer Ausführung elektrisch bzw. mit Strom bzw. Spannung versorgbar ist bzw. versorgt wird bzw. die hierzu vorgesehen, insbesondere eingerichtet, sind bzw. verwendet werden, und die sich hierzu in einer Ausführung axial bzw. parallel (zur Rotationsachse des Stators bzw. Elektromotors) erstrecken.

Erfindungsgemäß weist der Stator eine Mehrzahl von Klammern auf, die jeweils eine oder mehrere, in einer Ausführung jeweils eine einzige oder genau zwei, der, in einer Ausführung in diesem Bereich parallel( angeordnet)en, Leitungen kontaktierend umgreifen und mit wenigstens, in einer Ausführung genau, einem der Anschlüsse verbunden sind bzw. werden. Klammern und Kontaktring sind bzw. werden in einer Ausführung separat hergestellt und anschließend miteinander verbunden bzw. bilden voneinander verschiedene, miteinander (nach ihrer Herstellung) verbundene Bauteile.

Durch bzw. über diese Klammern kann in einer Ausführung die Anbindung des Kontaktrings und der Leitungen, insbesondere ihre Herstellung, Zuverlässigkeit, Stabilität und/oder elektrische Eigenschaft, verbessert werden.

In einer Ausführung sind die Klammern jeweils U-artig (ausgebildet) bzw. weisen zwei Schenkel auf, die, in einer Ausführung radial außen, in einen Steg übergehen.

Hierdurch kann in einer Ausführung die Verbindung der Klammern und Leitungen miteinander verbessert werden.

Erfindungsgemäß klemmen die Klammern die Leitungen bzw. sind bzw. werden auf diese (auf)geklemmt.

Hierdurch kann in einer Ausführung die Verbindung der Klammern und Leitungen miteinander, insbesondere während einer Herstellung des Stators, verbessert werden.

Zusätzlich oder alternativ sind bzw. werden in einer Ausführung die Klammern stoffschlüssig mit den Leitungen verbunden, in einer Ausführung thermisch bzw. durch Erwärmen, insbesondere durch Schweißen und/oder mittels Stromdurchfluss.

Hierdurch kann in einer Ausführung die Verbindung der Klammern und Leitungen miteinander, insbesondere ihre Zuverlässigkeit, Stabilität und/oder elektrische Eigenschaft, (weiter) verbessert werden.

Erfindungsgemäß weisen Befestigungsflächen der Anschlüsse die Klammern berührende Erhebungen auf. Zusätzlich weisen in einer Ausführung Befestigungsflächen der Klammern die Anschlüsse berührende Erhebungen auf. Diese Erhebungen sind bzw. werden in einer Ausführung mittels Umformen, vorteilhafterweise durch Prägen, hergestellt.

Hierdurch kann in einer Ausführung die Verbindung der Klammern mit den Anschlüssen, insbesondere ihre Herstellung, Zuverlässigkeit, Stabilität und/oder elektrische Eigenschaft, (weiter) verbessert werden.

Erfindungsgemäß sind die Klammern stoffschlüssig mit den Anschlüssen verbunden, in einer Ausführung thermisch bzw. durch Erwärmen, insbesondere durch Schweißen und/oder mittels Stromdurchfluss.

Hierdurch kann in einer Ausführung die Verbindung der Klammern mit den Anschlüssen, insbesondere ihre Herstellung, Zuverlässigkeit, Stabilität und/oder elektrische Eigenschaft, (weiter) verbessert werden.

Insbesondere sind bzw. werden somit in einer Ausführung Klammern und Anschlüsse durch Buckelschweißen miteinander verbunden.

Hierdurch kann in einer Ausführung die Verbindung der Klammern mit den Anschlüssen, insbesondere ihre Herstellung, Zuverlässigkeit, Stabilität und/oder elektrische Eigenschaft, (weiter) verbessert werden.

Erfindungsgemäß greifen die Erhebungen der Befestigungsflächen der Anschlüsse ("Anschlussbefestigungsflächen") in Vertiefungen der Klammern ein. Zusätzlich greifen in einer Ausführung, insbesondere die vorgenannten, Erhebungen der Befestigungsflächen der Klammern ("Klammerbefestigungsflächen") in Vertiefungen der Anschlüsse ein. Diese Vertiefungen werden bzw. sind in einer Ausführung zusammen mit den in sie eingreifenden Erhebungen der Anschluss- bzw. Klammerbefestigungsflächen hergestellt, in einer Ausführung durch (gemeinsames) Umformen, insbesondere Prägen.

Hierdurch kann in einer Ausführung die Verbindung der Klammern mit den Anschlüssen, insbesondere ihre Herstellung, Zuverlässigkeit, Stabilität und/oder elektrische Eigenschaft, (weiter) verbessert werden.

In einer Ausführung liegen, insbesondere vor dem Verbinden ausgebildeten, Erhebungen der Anschlussbefestigungsflächen auf vertiefungsfreien, insbesondere ebenen oder konvexen, Bereichen der Klammern auf. Zusätzlich oder alternativ liegen in einer Ausführung, insbesondere die vorgenannten und/oder vor dem Verbinden ausgebildeten, Erhebungen der Klammerbefestigungsflächen auf vertiefungsfreien, insbesondere ebenen oder konvexen, Bereichen der Anschlüsse auf.

Hierdurch kann in einer Ausführung die stoffschlüssige Verbindung der Klammern mit den Anschlüssen, insbesondere ihre Herstellung, Zuverlässigkeit, Stabilität und/oder elektrische Eigenschaft, (weiter) verbessert werden, insbesondere durch Buckelschweißen.

In einer Ausführung weisen die Klammern jeweils einen radial innenseitigen Schlitz auf, wobei sich in einer Ausführung die beiden radial innenseitigen Schenkelenden einer U-artigen Klammer jeweils in diesem Schlitz berühren oder voneinander durch einen Spalt beabstandet sind.

Zusätzlich oder alternativ weisen die, in einer Ausführung U-artigen, Klammern in einer Ausführung jeweils wenigstens einen abgewinkelten Schenkel auf.

Hierdurch kann in einer Ausführung die Verbindung der Klammern mit den Anschlüssen, insbesondere ihre Herstellung, Zuverlässigkeit, Stabilität und/oder elektrische Eigenschaft, (weiter) verbessert werden.

Ein Verfahren zum Herstellen eines hier beschriebenen Stators weist die im unabhängigen Anspruch 7 definierten Schritte auf.

Hierdurch, insbesondere indem in einer Ausführung zunächst die Klammern auf die Leitungen aufgesetzt, geklemmt, und (erst) anschließend mit den Anschlüssen verbunden werden, kann in einer Ausführung die Herstellung des Stators verbessert werden.

In einer Ausführung werden bzw. sind die Klammern und Leitungen, in einer Ausführung beim Verbinden der Klammern mit den Anschlüssen, stoffschlüssig miteinander verbunden. Insbesondere können durch das bzw. beim Verschweißen von Klammern und Anschlüssen zugleich die Klammern und Leitungen miteinander verschweißt werden, in einer Ausführung unter wenigstens teilweisem Abschmelzen ihrer Isolierhüllen.

Hierdurch kann in einer Ausführung die Herstellung des Stators, insbesondere eine Prozesszeit, -güte und/oder -stabilität, (weiter) verbessert werden.

In einer Ausführung werden die Klammern durch radial, in einer Ausführung von radial außen, zugestellte Elektroden mit den Leitungen und/oder Anschlüssen verbunden.

Hierdurch kann in einer Ausführung die Herstellung des Stators, insbesondere eine Prozesszeit, -güte und/oder -stabilität, (weiter) verbessert werden.

Eine Axialrichtung ist in einer Ausführung parallel zu einer Rotationsachse des Stators bzw. (Rotors des) Elektromotors, eine Umfangsrichtung entsprechende eine Drehrichtung um die Rotationsachse, eine Radialrichtung in einer Ausführung senkrecht zur Axial- und Umfangsrichtung.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil eines Stators eines Elektromotors nach einer Ausführung der vorliegenden Erfindung in einem axialen Teilschnitt bei dessen Herstellung;
- Fig. 2: den Teil des Stators bei einem weiteren Verfahrensschritt; und
- Fig. 3: den Teil des Stators nach diesem Verfahrensschritt.

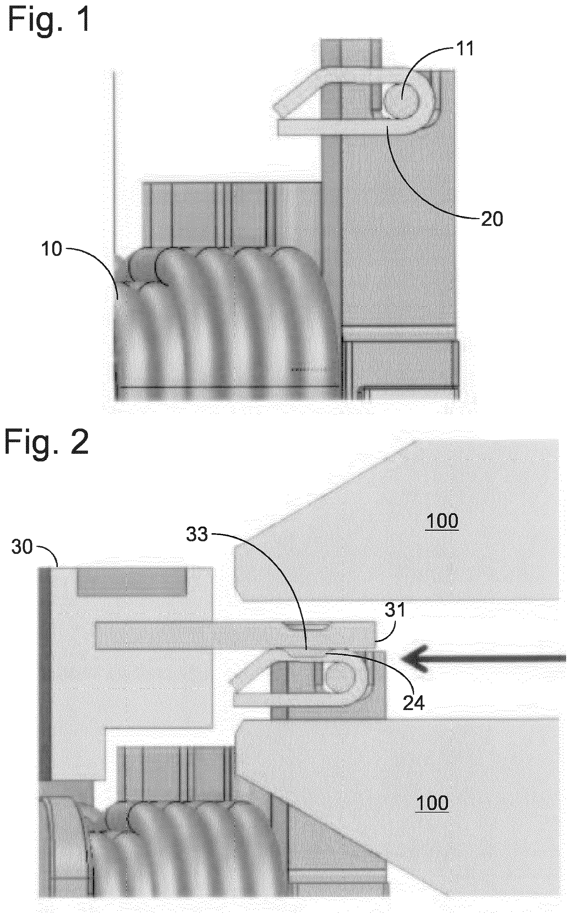

Fig. 1 zeigt einen Teil eines Stators eines Elektromotors bei dessen Herstellung nach einer Ausführung der vorliegenden Erfindung in einem Teilschnitt, der eine Rotationsachse des Stators bzw. Elektromotors (vertikal in Fig. 1) enthält.

Der Stator weist eine Mehrzahl von Spulenwicklungen 10 und integral hiermit ausgebildeten Leitungen 11 zu deren elektrischen Versorgung sowie eine Mehrzahl von U-artigen Klammern 20 auf, wobei eine Klammer jeweils auf eine der Leitungen geklemmt wird bzw. ist, wie im Teilschnitt der Fig. 1 dargestellt.

Ein Kontaktring 30, der mehrere Anschlüsse 31 aufweist, welche sich radial nach außen erstrecken, wird derart auf die Klammern 20 aufgesetzt, dass jede Klammer einen dieser Anschlüsse 31 bzw. dessen Anschlussbefestigungsfläche 32 berührt. Die Anschlüsse 31 bzw. Anschlussbefestigungsflächen 32 weisen hierzu jeweils eine geprägte Erhebung 33 auf, die in eine entsprechende Vertiefung 24 einer Klammer 20 eingreift, welche in einer Ausführung (erst) beim bzw. durch das gemeinsame(n) Prägen hergestellt wird. In einer zur Erfindung nicht gehörenden Abwandlung liegen die Erhebungen 33 auf den (in der Abwandlung) vertiefungsfreien, insbesondere ebenen, Klammern auf, anstatt in (dann nicht vorhandene) Vertiefungen 24 einzugreifen.

In dem in Fig. 2 dargestellten Verfahrensschritt werden Elektroden 100, wie in Fig. 2 durch einen Bewegungspfeil angedeutet, von radial außen zugestellt und (axial) geschlossen.

Durch diese Elektroden 100 werden die Klammern 20 einerseits mit den Anschlüssen 31 und andererseits zugleich mit den durch sie geklemmten Leitungen 11 verschweißt, wobei insbesondere in der Abwandlung durch die Erhebung 33 vorteilhaft ein Buckelverschweißen erfolgt und zudem die Leitungen 11 ummantelte Isolierhüllen (nicht dargestellt) wenigstens teilweise abgeschmolzen werden.

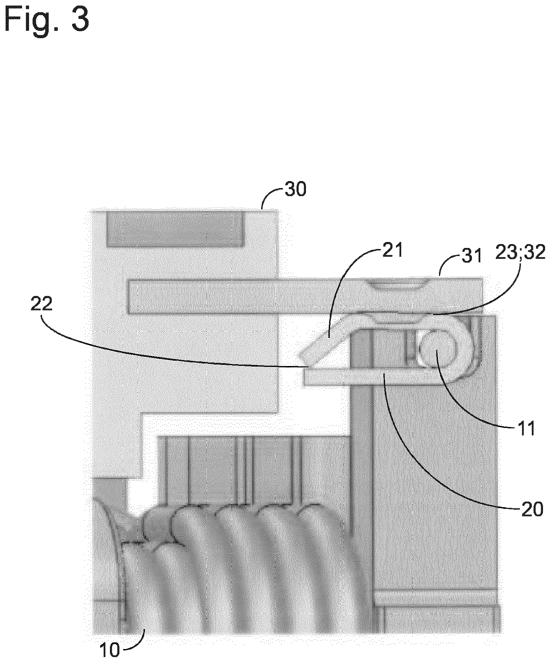

Fig. 3 zeigt den Teil des Stators nach dem Verschweißen. Man erkennt insbesondere den abgewinkelten Schenkel 21 der U-artigen Klammer 20 sowie deren radial innenliegenden Schlitz 22.

Obwohl in der vorhergehenden Beschreibung exemplarische Ausführungen erläutert wurden, sei darauf hingewiesen, dass eine Vielzahl von Abwandlungen möglich ist.

Erfindungsgemäß ist eine Klammer 20 jeweils auf wenigstens, im dargestellten Ausführungsbeispiel genau eine der Leitungen 11 geklemmt. In einer nicht dargestellten Abwandlung kann (jeweils wenigstens, insbesondere genau) eine weitere bzw. zweite Leitung parallel zu der jeweiligen, in Fig. 1-3 im Schnitt dargestellten Leitung 11 angeordnet sein bzw. werden und die Klammer 20 jeweils beide Leitungen kontaktierend umgreifen und (ein)klemmen.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

| | |
|---|---|
| 10 | Spulenwicklung |
| 11 | Leitung |
| 20 | Klammer |
| 21 | Schenkel |
| 22 | Schlitz |
| 24 | Vertiefung |
| 30 | Kontaktring |
| 31 | Anschluss |
| 32 | Anschlussbefestigungsfläche |
| 33 | Erhebung |
| 100 | Elektrode |

## Patentansprüche

1. Stator für einen Elektromotor, wobei der Stator
eine Mehrzahl von wenigstens teilweise mit einer Isolierhülle ummantelten Leitungen (11) zur elektrischen Versorgung von Spulenwicklungen (10) des Stators;
einen Kontaktring (30) mit Anschlüssen (31) zur elektrischen Versorgung dieser Leitungen; und
eine Mehrzahl von Klammern (20) aufweist, wobei die Klammern jeweils wenigstens eine der Leitungen (11) kontaktierend umgreifen und mit wenigstens einem der Anschlüsse (31) verbunden sind, **dadurch gekennzeichnet, dass** die Klammern die Leitungen klemmen, wobei Befestigungsflächen (32) der Anschlüsse (31) die Klammern berührende Erhebungen (33) aufweisen, die in Vertiefungen (24) der Klammern eingreifen, und wobei die Anschlüsse (31) und die Klammern (20) stoffschlüssig miteinander verbunden sind.

2. Stator nach dem vorhergehenden Anspruch, wobei die Klammern stoffschlüssig mit den Leitungen verbunden sind.

3. Stator nach Anspruch 1 oder 2, wobei Erhebungen (33) der Anschlussbefestigungsflächen (32) auf vertiefungsfreien Bereichen der Klammern (20) und/oder Erhebungen der Klammerbefestigungsflächen auf vertiefungsfreien Bereichen der Anschlüsse (31) aufliegen.

4. Stator nach einem der vorhergehenden Ansprüche, wobei die Klammern einen radial innenseitigen Schlitz (22) und/oder wenigstens einen abgewinkelten Schenkel (21) aufweisen.

5. Stator nach einem der vorhergehenden Ansprüche, wobei die Klammern U-artig ausgebildet sind.

6. Elektromotor mit einem Stator nach einem der vorhergehenden Ansprüche.

7. Verfahren zum Herstellen eines Stators nach einem der vorhergehenden Ansprüche, mit den Schritten Klemmen der Leitungen (11) mit den Klammern (20); und Stoffschlüssiges Verbinden der Klammern (20) mit den Anschlüssen (31).

8. Verfahren nach dem vorhergehenden Anspruch, wobei die Klammern (20) und Leitungen (11), insbesondere beim Verbinden der Klammern (20) mit den Anschlüssen (31), stoffschlüssig miteinander verbunden werden.

9. Verfahren nach einem der vorhergehenden Ansprüche, wobei die Klammern (20) durch radial zugestellte Elektroden (100) mit den Leitungen (11) und/oder Anschlüssen (31) verbunden werden.

## Claims

1. Stator for an electric motor, wherein the stator has a multiplicity of lines (11), which are at least partially encapsulated with an insulating sheath, for the supply of electricity to coil windings (10) of the stator;
a contact ring (30) with terminals (31) for the supply of electricity to said lines; and
a plurality of clips (20), wherein the clips each engage around at least one of the lines (11) with a contacting action and are connected to at least one of the terminals (31), **characterized in that** the clips clamp the lines, wherein fastening surfaces (32) of the terminals (31) have raised portions (33) which touch the clips and engage into recesses (24) in the clips, and wherein the terminals (31) and the clips (20) are cohesively connected to one another.

2. Stator according to the preceding claim, wherein the clips are cohesively connected to the lines.

3. Stator according to Claim 1 or 2, wherein raised portions (33) of the terminal fastening surfaces (32) rest on recess-free regions of the clips (20) and/or raised portions of the clip fastening surfaces rest on recess-free regions of the terminals (31).

4. Stator according to any of the preceding claims, wherein the clips have a slot (22) radially at the inside and/or have at least one angled leg (21).

5. Stator according to any of the preceding claims, wherein the clips are of U-shaped design.

6. Electric motor having a stator according to any of the preceding claims.

7. Method for producing a stator according to any of the preceding claims, comprising the steps of clamping the lines (11) using the clips (20); and
cohesively connecting the clips (20) to the terminals (31) .

8. Method according to the preceding claim, wherein the clips (20) and lines (11) are cohesively connected to one another, in particular during the connection of the clips (20) to the terminals (31).

9. Method according to any of the preceding claims, wherein the clips (20) are connected to the lines (11) and/or terminals (31) by means of radially advanced electrodes (100).

## Revendications

1. Stator pour un moteur électrique, dans lequel le stator présente
une pluralité de conducteurs (11), au moins partiellement enveloppés d'une gaine isolante, pour l'alimentation électrique d'enroulements de bobine (10) du stator ; une bague de contact (30) pourvue de bornes (31) pour l'alimentation électrique desdits conducteurs ; et
une pluralité de pinces (20), dans lequel les pinces entourent respectivement au moins l'un des conducteurs (11) en établissant un contact et sont reliées à au moins l'une des bornes (31), **caractérisé en ce que** les pinces serrent les conducteurs, dans lequel des surfaces de fixation (32) des bornes (31) présentent des bosses (33) entrant en contact avec les pinces et qui viennent en prise dans des creux (24) des pinces, et dans lequel les bornes (31) et les pinces (20) sont reliées ensemble par liaison de matière.

2. Stator selon la revendication précédente, dans lequel les pinces sont reliées aux conducteurs par liaison de matière.

3. Stator selon la revendication 1 ou 2, dans lequel des bosses (33) des surfaces de fixation de borne (32) reposent sur des zones sans creux des pinces (20), et/ou des bosses des surfaces de fixation de pince reposent sur des zones sans creux des bornes (31).

4. Stator selon l'une quelconque des revendications précédentes, dans lequel les pinces présentent une fente (22) radialement interne et/ou au moins une branche coudée (21).

5. Stator selon l'une quelconque des revendications précédentes, dans lequel les pinces sont réalisées en forme de U.

6. Moteur électrique comprenant un stator selon l'une quelconque des revendications précédentes.

7. Procédé permettant de fabriquer un stator selon l'une quelconque des revendications précédentes, comprenant les étapes consistant à serrer les conducteurs (11) à l'aide des pinces (20) ;
relier les pinces (20) aux bornes (31) par liaison de matière.

8. Procédé selon la revendication précédente, dans lequel les pinces (20) et les conducteurs (11), en particulier lors de la liaison des pinces (20) aux bornes (31), sont reliés ensemble par liaison de matière.

9. Procédé selon l'une quelconque des revendications précédentes, dans lequel les pinces (20) sont reliées aux conducteurs (11) et/ou aux bornes (31) par des électrodes (100) approchées radialement.
